# EUROPÄISCHE PATENTSCHRIFT

(11) **EP 1 319 878 B1**
(45) Veröffentlichungstag und Bekanntmachung des Hinweises auf die Patenterteilung: **10.11.2004**
(21) Anmeldenummer: 02027007.0
(22) Anmeldetag: 03.12.2002
(51) Int. Cl.: F16K 15/02

(54) **Rückschlagventil**
Check valve
Soupape de retenue

(30) Priorität: 13.12.2001 DE 10161462; 20.03.2002 DE 20204430 U; 21.10.2002 DE 20216210 U
(43) Veröffentlichungstag der Anmeldung: 18.06.2003
(73) Patentinhaber: Hebmüller, Axel, 41564 Kaarst (DE)
(72) Erfinder: Hebmüller, Axel, 41564 Kaarst (DE)
(74) Vertreter: Paul, Dieter-Alfred, Dipl.-Ing.

(56) Entgegenhaltungen:
- WO-A-98/26830
- DE-C- 51 968
- US-A- 1 114 067
- US-A- 2 748 798
- US-A- 3 149 643

## Beschreibung

Die vorliegende Erfindung betrifft ein Ventilteller für ein Rückschlagventil gemäß Anspruch 1.

Rückschlagventile dieser Art sind beispielsweise aus der DE-OS 14 50 483 bekannt und werden in Fluidleitungen eingebaut, um sicherzustellen, daß in der Leitung ein Fluid nur in einer Strömungsrichtung fließen kann.

Ein ähmliches Schließelement ist in US 3 149 643 offenbart.

Die bekannten Rückschlagventile haben sich in der Praxis durchaus bewährt. Als problematisch wird jedoch zum Teil angesehen, daß die bekannten Ventilteller kompliziert im Aufbau und nur bedingt für "sterile" Anwendungen geeignet sind.

Aufgabe der Erfindung ist es daher, ein Rückschlagventil der eingangs genannten Art anzugeben, das einen einfachen Aufbau besitzt und ein höchstes Maß an Sterilität gewährleistet.

Diese Aufgabe ist erfindungsgemäß dadurch gelöst, daß der Ventilteller ausgehend von seiner Führungsfläche unter Bildung einer geneigten Mantelfläche einen in Richtung des Ventilsitzes kleiner werdenden Durchmesser besitzt, und daß die Durchflußöffnungen als Bohrungen ausgebildet sind, die in dem Ventilteller von der geneigten Mantelfläche ausgehen und in der von der Dichtungsfläche weg weisenden Richtung schräg aufeinander zulaufen und gleichmäßig über den Umfang des Ventiltellers verteilt angeordnet sind.

Das Rückschlagventil mit dem erfindungsgemäßen Ventilteller ist einfach im Aufbau und in der Herstellung. Durch die Form des Ventiltellers kann außerdem Gewicht eingespart werden, und weiterhin werden auch die Strömungsverhältnisse für das Fluid beim Öffnen des Ventils verbessert, da es leichter am Ventilteller vorbei zu den Durchflußöffnungen gelangen kann. Beispielsweise kann der Ventilteller ausgehend von seiner Führungsfläche konisch zulaufen, wobei dann der Winkel der konusförmigen Mantelfläche zur Horizontalen vorzugsweise etwa 45° beträgt. Alternativ kann die Mantelfläche aber auch gekrümmt ausgebildet sein, beispielsweise ausgehend von der Führungsfläche nach unten hin in konvexer Weise zulaufen.

Dadurch, daß die Durchflußöffnungen in dem Ventilteller von der geneigten Mantelfläche ausgehen und nach oben hin schräg aufeinanderzulaufen, wobei sie zweckmäßigerweise unter einem Winkel von 30 bis 60°, insbesondere von 45° zur Achse des Ventiltellers, geneigt sind, werden schließlich die Strömungseigenschaften optimiert.

Wenn ein Rückschlagventil verwendet wird, bei welchem der Ventilteller zwischen einer oberen Öffnungstellung und einer unteren Schließstellung in dem Ventilgehäuse bewegbar ist, kann der Ventilteller gemäß einer bevorzugten Ausführungsform allein durch seine Schwerkraft in der Schließstellung beaufschlagt werden, so daß zusätzliche Rückstellmittel in Form von Rückstellfedern oder dergleichen, wie sie im Stand der Technik vorgesehen sind, überflüssig werden und damit die Anzahl von Bauteilen weiter reduziert wird.

Wenn bei dieser Ausführungsform im Betrieb ein Fluid wie beispielsweise Wasser durch das Rückschlagventil strömt, wird der Ventilteller bei einem ausreichend hohen Eingangsdruck in vertikaler Richtung angehoben, so daß das Fluid durch die Durchflußöffnungen des Ventiltellers strömen kann. Mit zunehmendem Eingangsdruck wird auch der Durchfluß zunehmen, bis das Rückschlagventil komplett geöffnet ist. Während des Öffnungsprozesses verhalten sich der Druck und das Öffnen des Ventils nicht unbedingt proportional, sind aber stabil. Bei einer Reduzierung des Eingangsdrucks schließt das Rückschlagventil. Ein Rückströmen des Mediums wird damit vermieden.

Die Höhe des Eingangsdrucks, bei welchem das erfindungsgemäße Rückschlagventil öffnet, hängt im wesentlichen von dem Gewicht des Ventiltellers und der herrschenden Gravitationskraft ab. Im Regelfall ist es erwünscht, daß schon bei geringen Eingangsdrücken von beispielsweise 0,02 bar das Ventil öffnen und Medium durchlassen wird.

Gemäß einer Ausführungsform der Erfindung ist vorgesehen, daß die Führungsfläche am oberen Randbereich des Ventiltellers ausgebildet wird. Die Führungsfläche kann dabei einen geschlossenen Führungsrand bilden. Dies ist aber nicht unbedingt notwendig. Beispielsweise ist es auch möglich, daß die Durchflußöffnungen zum Rand des Ventiltellers offen sind und damit die Führungsfläche durch die Durchflußöffnungen unterbrochen wird.

Die Durchflußöffnungen können prinzipiell in beliebiger Weise ausgebildet sein. Um eine möglichst gleichmäßige Kräfteverteilung zu erreichen, ist gemäß einer bevorzugten Ausführungsform vorgesehen, daß die Durchflußöffnungen gleichmäßig über den Umfang des Ventiltellers verteilt angeordnet sind. Dabei können die Durchflußöffnungen beispielsweise als Bohrungen ausgebildet sein, die sich leicht herstellen lassen.

Die Ventilteller und Ventilsitz können metallisch dichtend, d.h. als entsprechend glatte Metallflächen ausgebildet sein. Gemäß einer bevorzugten Ausführungsform ist jedoch vorgesehen, daß eine der Dichtungsflächen an einem elastischen Dichtungsring, der beispielsweise in eine Ringnut an der Unterseite des Ventiltellers eingesetzt ist, gebildet wird. Der Dichtungsring kann beispielsweise aus Gummi mit einer Shore-Härte 80 bestehen.

In weiterer Ausbildung dieser Ausführungsform kann vorgesehen sein, daß der Dichtungsring sich zur Dichtfläche hin verjüngt. Insbesondere kann der Dichtungsring einen trapezförmigen Querschnitt besitzen, an dessen kurze Seite die Dichtfläche ausgebildet ist.

Zur Gewährleistung einer hohen Sterilität sind der Ventilteller und/oder das Ventilgehäuse zweckmäßigerweise aus Edelstahl hergestellt, wobei die mit dem Fluid in Kontakt kommenden Flächen, insbesondere die Oberfläche des Ventiltellers, poliert, insbesondere elektropoliert sein können.

Das Ventilgehäuse besteht gemäß einer bevorzugten Ausführungsform der Erfindung aus einem Gehäuseunterteil mit dem vertikalen Kanalabschnitt und dem Ventilsitz und einem Gehäuseoberteil mit einer zur Unterseite hin offenen Durchflußkammer, in welcher der Ventilteller bewegbar geführt ist. Damit liegen der Ventilsitz und die Durchflußkammer gewissermaßen in der Trennebene des Ventilgehäuses und können leicht bearbeitet und montiert werden.

In an sich bekannter Weise sind das Gehäuseunterteil und das Gehäuseoberteil miteinander lösbar verbunden und zueinander zentriert. Zur Herstellung der Verbindung können an den Gehäuseteilen in an sich bekannter weise Verbindungsflansche mit zueinander korrespondierenden Durchgangsbohrungen für Verbindungsschrauben vorgesehen sein.

Die Durchflußkammer besitzt naturgemäß einen deutlich größeren Durchmesser als der vertikale Kanalabschnitt, welcher durch den Ventilteller verschlossen wird, und auch ein sich an die Durchflußkammer nach oben hin anschließender Kanalabschnitt wird einen deutlich geringeren Durchmesser besitzen als die Durchflußkammer. In diesem Fall ist zweckmäßigerweise der Übergangsbereich zwischen der Durchflußkammer und dem sich daran nach oben anschließenden Kanalabschnitt konisch zulaufend ausgebildet, wobei der Winkel des Übergangsbereichs zur Horizontalen 30 bis 60° betragen sollte.

Im übrigen ist gemäß einer vorteilhaften Ausführungsform der Erfindung vorgesehen, daß der Boden der Durchflußkammer ausgehend von der Wandung, an welcher der Ventilteller geführt ist, zum Ventilsitz hin mit einem Neigungswinkel von 1,5 bis 4°, insbesondere von 2° abfällt. Hierdurch wird sichergestellt, daß sich in dem Eckenbereich zwischen der Durchflußkammerwandung und dem Durchflußkammerboden keine Flüssigkeit ansammeln kann.

Bei einer weiteren Ausführungsform der Erfindung ist vorgesehen, daß in dem Gehäuseunterteil ein insbesondere horizontaler Einlaßkanalabschnitt ausgebildet ist, der mit der Durchflußkammer über den vertikalen Kanalabschnitt verbunden ist.

Alternativ zu der zuvor beschriebenen Ausführungsform, bei welcher sich obenseitig an die Durchflußkammer ein Kanalabschnitt anschließt, kann auch vorgesehen sein, daß in dem Gehäuseunterteil ein insbesondere horizontaler Auslaßkanalabschnitt ausgebildet ist, der mit dem Einlaßkanalabschnitt über die Durchflußkammer verbunden ist. Bei dieser Ausführungsform sind dann der Einlaßkanalabschnitt und der Auslaßkanalabschnitt des Rückschlagventils in dem Gehäuseunterteil ausgebildet und über die darüber liegend in dem Gehäuseoberteil ausgebildete Durchflußkammer, in welcher auch der Ventilteller angeordnet ist, miteinander verbunden. In diesem Fall ist der Ventilsitz teilweise an einer den Einlaßkanalabschnitt von dem Auslaßkanalabschnitt trennenden Gehäusezwischenwand ausgebildet. Des weiteren kann zwischen Gehäuseoberteil und Gehäuseunterteil ein den Ventilsitz umgebender und zum Auslaßkanalabschnitt öffnender Abflußkanal ausgebildet sein, der insbesondere an seiner zur Durchflußkammer weisenden Oberseite offen ist und eine zum Auslaßkanalabschnitt hin zunehmende Tiefe besitzt, so daß Flüssigkeit in dem Ablaufkanal automatisch in den Auslaßkanalabschnitt abfließt.

Bei Rückschlagventilen, bei welchen der Ventilteller zwischen einer unteren Öffnungsstellung und einer oberen Schließstellung vertikal in dem Ventilgehäuse bewegbar ist, kann der Ventilteller im Grunde genommen in gleicher Weise wie bei den zuvor beschriebenen Ausführungsformen ausgebildet sein mit der Maßgabe, daß es dann in umgekehrter Einbauweise, d.h. mit nach oben gerichteter Dichtungsfläche eingebaut wird. Es sind jedoch zusätzliche Maßnahmen erforderlich, um den Ventilteller in seine obere Schließstellung zu drücken. Hierzu kann der Ventilteller einerseits an seiner Unterseite durch ein Federelement abgestützt werden, welches ihn in seine Schließstellung drückt. Alternativ kann der Ventilteller aus Polytetraflourethylen (Teflon) bestehen, wobei er dann in seine obere Schließstellung allein durch die Auftriebskraft des Fluids in den Durchflußkanal gedrückt wird.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Vorderansicht eines erfindungsgemäßen Rückschlagventils im Halblängsschnitt,
- Figur 2: den Ausschnitt A aus Figur 1,
- Figur 3: im Längsschnitt einen alternativen Ventilteller für das Rückschlagventil aus Figur 1 mit eingelegtem Dichtungsring,
- Figur 4: den Ventilteller aus Figur 3 in perspektivischer Darstellung,
- Figur 5: den in den Ventilteller gemäß Figur 3 eingelegten Dichtungsring im Querschnitt,
- Figur 6: eine zweite Ausführungsform eines erfindungsgemäßen Rückschlagventils im Längsschnitt,
- Figur 7: das Rückschlagventil aus Figur 6 in Draufsicht mit abgenommenem Gehäuseoberteil,
- Figur 8: das Rückschlagventil im Schnitt A-A aus Figur 7;
- Figur 9: das Rückschlagventil im Schnitt B-B aus Figur 7;
- Figur 10: eine dritte Ausführungsform eines erfindungsgemäßen Rückschlagventils in perspektivischer Ansicht und
- Figur 11: das Rückschlagventil aus Figur 10 im Längsschnitt.

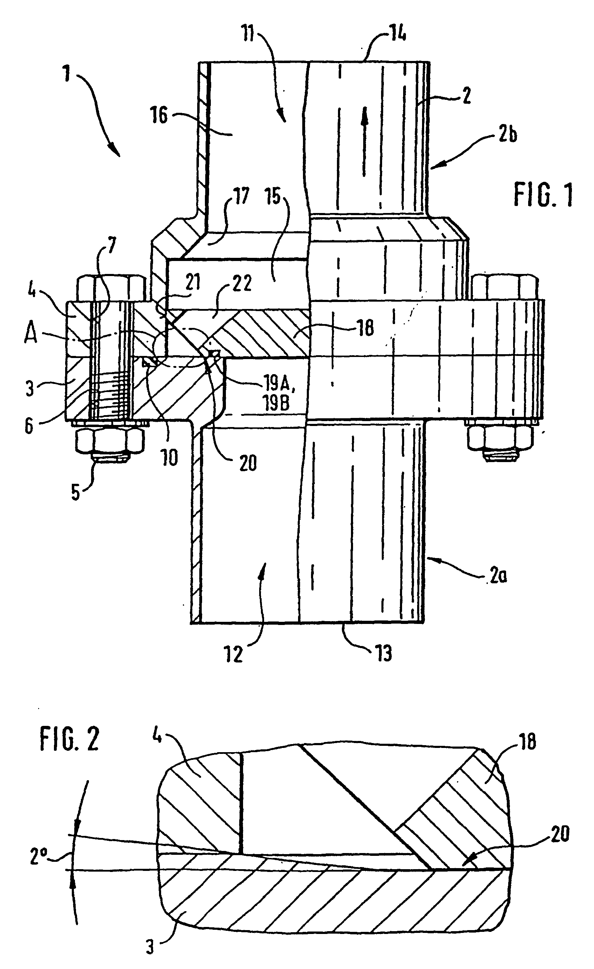

In der Figur 1 ist ein Rückschlagventil 1 gemäß der vorliegenden Erfindung dargestellt, das in der dargestellten Weise vertikal in die Rohrleitung beispielsweise eines WFI-Wassersystems eingebaut werden kann. Das Rückschlagventil 1 besitzt ein Ventilgehäuse 2 aus Edelstahl, das im wesentlichen von einem Gehäuseunterteil 2a und einem Gehäuseoberteil 2b gebildet wird. Die beiden Gehäuseteile 2a, 2b sind miteinander verschraubt. Hierzu sind in an sich bekannter Weise an den Gehäuseteilen 2a, 2b Verbindungsflansche 3, 4 mit zueinander korrespondierenden Durchgangsbohrungen 6, 7 für die Verbindungsschrauben 5 vorgesehen.

Die beiden Gehäuseteile 2a, 2b sind zentriert zueinander ausgerichtet. Hierzu ist an dem Gehäuseunterteil 2a ein nicht dargestellter Zentrierbund und an dem Gehäuseoberteil 2b eine entsprechende Zentrierausnehmung vorgesehen. Der Spalt zwischen den Gehäuseteilen 2a, 2b ist durch Dichtungsring 10 abgedichtet.

In dem Ventilgehäuse 2 ist ein Durchflußkanal 11 ausgebildet, der sich in vertikaler Richtung zwischen einer Einlaßöffnung 13 an der Gehäuseunterseite und einer Auslaßöffnung 14 an der Gehäuseoberseite durch das Ventilgehäuse 2 erstreckt.

Der Durchflußkanal 11 umfaßt einen im Gehäuseunterteil 2a vorgesehenen vertikalen Kanalabschnitt, der eine Durchflußkammer 15, die einen erheblich größeren Durchmesser als der erste Kanalabschnitt 12 besitzt und zwischen den Gehäuseteilen 2a, 2b ausgebildet ist, und im Anschluß an die Durchflußkammer 15 einen zweiten vertikalen Kanalabschnitt 16, wobei der Übergangsbereich 17 zwischen der Durchflußkammer 15 und dem zweiten Kanalabschnitt 16 unter einem 45°-Winkel abgeschrägt ist.

In der Durchflußkammer 15 ist ein Ventilteller 18 aus Edelstahl vorgesehen, der in vertikaler Richtung zwischen einer oberen Öffnungsstellung und einer unteren Schließstellung, in welcher Dichtflächen 19A, 19B am Ventilteller 18 und einem Ventilsitz 20, welcher an der Oberseite des Gehäuseunterteils 2a vorgesehen ist und den Durchflußkanal 11 umgibt, dichtend in Anlage kommen, bewegbar ist.

Zur Führung der Vertikalbewegung ist der obere Randbereich des Ventiltellers 18 als Führungsfläche 21 ausgebildet, die an der ebenfalls als Führungsfläche ausgebildeten wandung der Durchflußkammer 15 anliegt.

Ausgehend von der Führungsfläche 21 nimmt der Durchmesser des Ventiltellers 18 nach unten hin bis zum Bereich seiner Dichtungsfläche 19a kontinuierlich ab. In der in Figur 1 dargestellten Ausführungsform läuft der Ventilteller 18 ausgehend von der Führungsfläche 21 nach unten hin konisch zu, wobei der Winkel der konusförmigen Mantelfläche 18A zur Horizontalen etwa 45° beträgt. Alternativ kann die Mantelfläche 18A aber auch gekrümmt sein, beispielsweise in der in Figur 2 dargestellten Weise nach unten hin konvex zulaufen.

Entlang seines Umfangs weist der Ventilteller 18 eine Vielzahl - hier 12 - Durchflußbohrungen 22 auf, die sich von der geneigten Mantelfläche 18A des Ventiltellers 18 zu dessen Oberseite erstrecken, wobei sie - wie insbesondere in Figur 2 gut erkennbar ist, nach oben hin unter einem Winkel von 45° zur Horizontalen aufeinander zulaufen.

In dem dargestellten Ausführungsbeispiel ist die Dichtungsfläche 19A des Ventiltellers 18 an einem Dichtungsring 24 ausgebildet, der in eine Ringnut 23 an der Ventiltellerunterseite eingespritzt ist, so daß Hohlräume, in denen sich Flüssigkeit sammeln könnte, vermieden werden. Der Dichtungsring 24a besteht hier aus Gummi mit einer Shore-Härte 80 und besitzt an seinem aus der Ringnut 24 herausragenden Teil einen trapezförmigen Ansatz, dessen kurze Seite die eigentliche Dichtfläche 19A bildet. Die korrespondierende Dichtfläche 19B am Ventilsitz 20 ist metallisch.

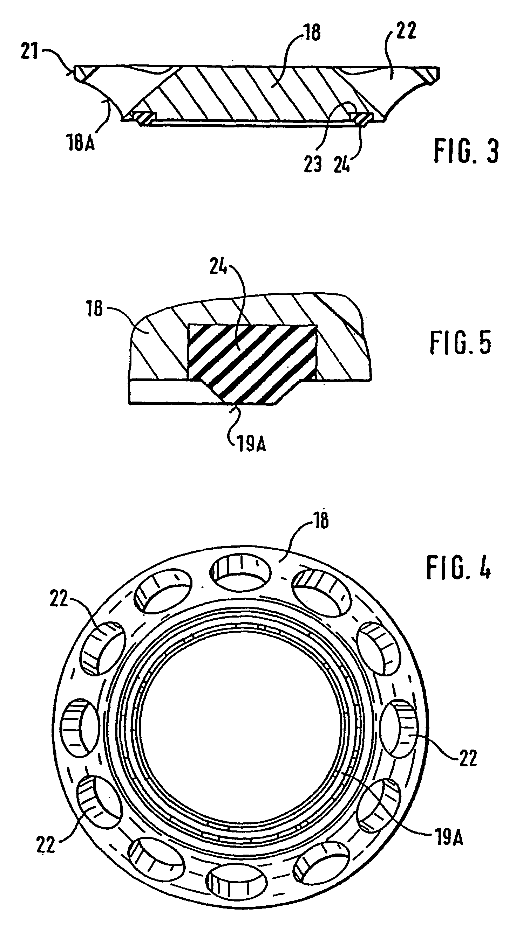

In Figur 5 ist dargestellt, daß der Boden der Durchflußkammer 15 von der Kammerwandung ausgehend in Richtung des Ventilsitzes 20 unter einem Winkel von 2° abfällt. Hierdurch wird verhindert, daß sich im Betrieb Flüssigkeit in dem Eckbereich zwischen der Wandung und dem Boden sammeln kann.

Im Betrieb ist das erfindungsgemäße Rückschlagventil 1 in der in Figur 1 dargestellten vertikalen Lage in eine Rohrleitung eingebaut, so daß der Ventilteller 18 durch sein Eigengewicht auf dem Ventilsitz 20 aufliegt und damit den Durchflußkanal 11 verschließt. Wenn an der Einlaßöffnung 13 ein hinreichend hoher Eingangsdruck vorliegt, wird der Ventilteller 18 aus der in Figur 1 dargestellten Lage angehoben, so daß Fluid von dem Kanalabschnitt 12 in die Durchflußkammer 15 und durch die Durchflußbohrungen 22 zum zweiten Kanalabschnitt 16 strömen kann. Je größer der Eingangsdruck wird, desto weiter hebt sich der Ventilteller 18 von dem Ventilsitz 20 ab, wobei die Vertikalbewegung durch den führenden Kontakt zwischen der Durchflußkammerwandung und der Führungsfläche 21 am oberen Randbereich des Ventiltellers 18 geführt wird. Nimmt der Eingangsdruck wieder ab, so senkt sich der Ventilteller 18 wieder ab, bis er auf dem Ventilsitz 20 zum Liegen kommt und den Durchflußkanal 11 wieder versperrt.

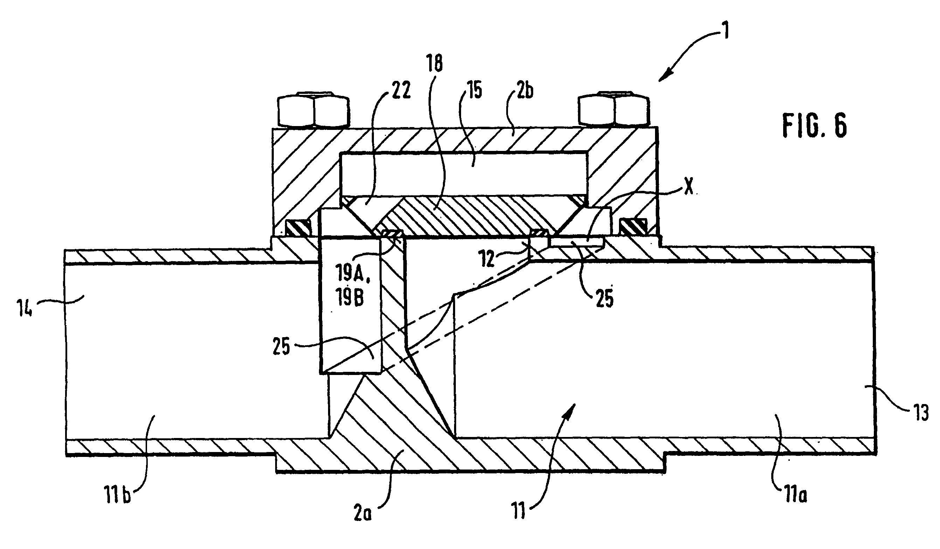

In den Figuren 6 bis 9 ist eine zweite Ausführungsform eines Rückschlagventils 1 gemäß der vorliegenden Erfindung dargestellt. Bauteile dieses Rückschlagventils 1, welche den Bauteilen des zuvor unter Bezugnahme auf die Figuren 1 bis 5 erläuterten Rückschlagventils 1 entsprechen, sind mit gleichen Bezugsziffern bezeichnet.

Das Rückschlagventil 1 besitzt ein Ventilgehäuse 2, das von einem Gehäuseunterteil 2a und einem damit verschraubten Gehäuseoberteil 2b gebildet wird. In dem Ventilgehäuse 2 ist ein Durchflußkanal 11 ausgebildet, der sich zwischen einer Einlaßöffnung 13 und einer Auslaßöffnung 14 durch das Ventilgehäuse 2 erstreckt. Anders als bei der in Figur 1 dargestellten Ausführungsform verläuft der Durchflußkanal 11 im wesentlichen horizontal und besitzt einen im Gehäuseunterteil 2a ausgebildeten horizontalen Einlaßkanalabschnitt 11a, der an seiner Auslaßseite über einen vertikalen Kanalabschnitt 12 mit der im Gehäuseoberteil 2b ausgebildeten Durchflußkammer 15 verbunden ist, und einen von dem Einlaßkanalabschnitt 11a durch eine Gehäusezwischenwand 2b getrennten, horizontalen Auslaßkanalabschnitt 11b, der an seiner Einlaßseite ebenfalls mit der Durchflußkammer 15 verbunden ist. Somit ergibt sich eine Anordnung, bei welcher der horizontale Einlaßkanalabschnitt 11a und der ebenfalls horizontale Auslaßkanalabschnitt 11b über die darüber liegende Durchflußkammer 15 miteinander verbunden sind.

In bereits beschriebener Weise ist auch bei der zweiten Ausführungsform in der Durchflußkammer 15 ein Ventilteller 18 vorgesehen, der zwischen einer oberen Öffnungsstellung und einer unteren Schließstellung, in welcher Dichtflächen 19A, 19B am Ventilteller 18 einerseits und einem Ventilsitz 20, der an der Oberseite des Gehäuseunterteils 2a ausgebildet ist und die Auslaßöffnung des vertikalen Kanalabschnitts 12 umgibt, andererseits dichtend in Anlage kommen, bewegbar ist.

Der Ventilteller 18 ist in gleicher Weise ausgebildet wie der Ventilteller 18, der in Verbindung mit den Figuren 3 bis 5 beschrieben wurde und weist insbesondere entlang seines Umfangs verteilt Durchflußbohrungen 22 auf, die sich von der geneigten Mantelfläche 18A des Ventiltellers 18 zu dessen Oberseite erstrecken.

Zwischen dem Gehäuseunterteil 2a und dem Gehäuseoberteil 2b ist ein Abflußkanal 25 ausgebildet, welcher den Ventilsitz 20 umgibt und zum Auslaßkanalabschnitt 11b hin offen ist.

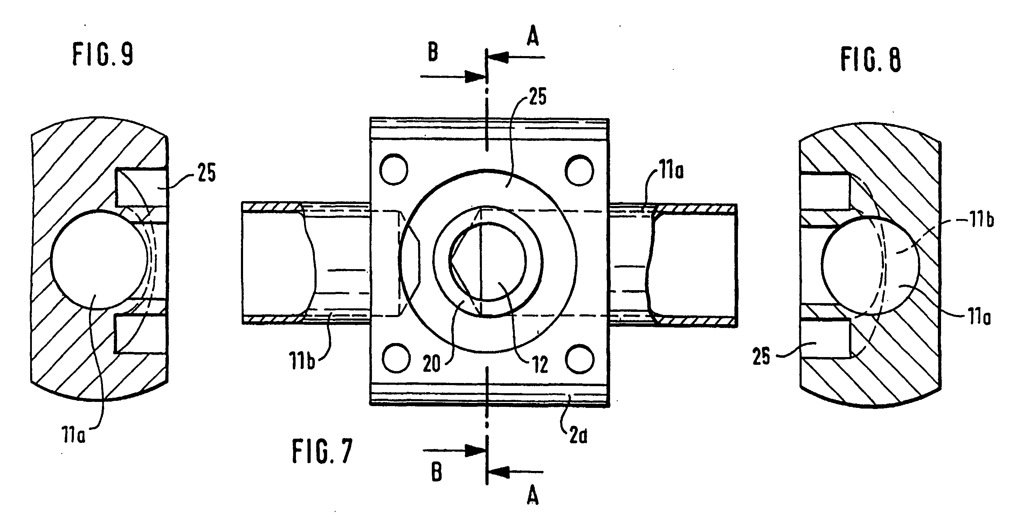

Wie insbesondere im Längsschnitt der Figur 6 gut erkennbar ist, ist der Abflußkanal 25 als zur Durchflußkammer 15 hin offener Kanal in das Gehäuseunterteil 2a gefräst, wobei er an seinem zur Ventileinlaßseite weisenden Ende (Position X) eine vergleichsweise geringe Tiefe besitzt, die in Richtung des Auslaßkanalabschnitts 11b hin zunimmt (siehe gestrichelte Linien). So ist in den Schnittdarstellungen der Figuren 8 und 9 erkennbar, daß der Ablaufkanal 25 in seinem in Ventillängsrichtung betrachteten Mittelbereich eine deutlich größere Tiefe besitzt als an seinem einlaßseitigen Ende und die Figur 6 läßt erkennen, daß er am Übergang zum Auslaßkanalabschnitt seine größte Tiefe besitzt. Durch diesen Ablaufkanal 25 kann Fluid in den Auslaßkanalabschnitt 2b abfließen.

Die Funktion des Rückschlagventils 1 ist die gleiche, wie sie anhand der ersten Ausführungsform beschrieben wurde. Zur Vermeidung von Wiederholungen wird auf die entsprechenden Ausführungen verwiesen.

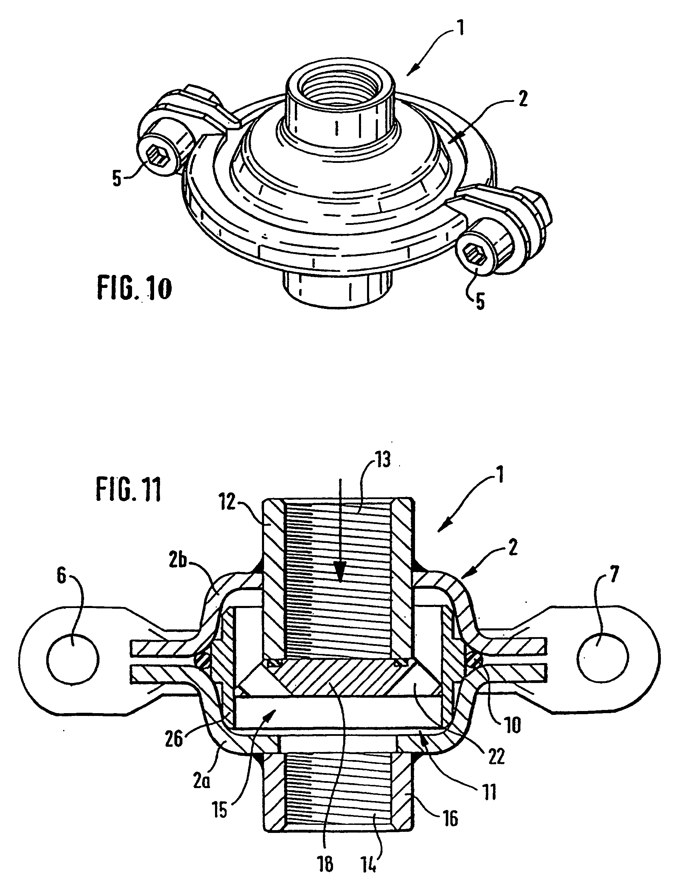

In den Figuren 10 und 11 ist eine dritte Ausführungsform eines erfindungsgemäßen Rückschlagventils 1 dargestellt. Dieses Rückschlagventil 1 entspricht von seinem Grundaufbau her dem in den Figuren 1 bis 5 dargestellten Rückschlagventil mit der Maßgabe, daß dieses auf den Kopf gestellt und von oben nach unten durchflossen wird. Konkret besitzt das Rückschlagventil 1 ein Ventilgehäuse 2 aus Edelstahl, das von einem Gehäuseunterteil 2a und einem Gehäuseoberteil 2b gebildet wird. Die beiden Gehäuseteile 2a und 2b sind miteinander verschraubt. Hierzu sind in an sich bekannter Weise an den Gehäuseteilen 2a, 2b Verbindungsflansche 3, 4 mit zueinander korrespondierenden Durchgangsbohrungen 6, 7 für Verbindungsschrauben 5 vorgesehen. Der Spalt zwischen den Gehäuseteilen 2a, 2b ist durch einen Dichtungsring 10 abgedichtet.

In dem Ventilgehäuseteil 2 ist ein Durchflußkanal 11 ausgebildet, der sich in vertikaler Richtung zwischen einer Einlaßöffnung 13 an der Gehäuseoberseite und einer Auslaßöffnung 14 an der Gehäuseunterseite durch das Ventilgehäuse 2 erstreckt. Der Durchflußkanal 11 umfaßt einen am Gehäuseoberteil 2b ausgebildeten ersten Kanalabschnitt 12, welcher die Einlaßöffnung 13 aufweist, und einen am Gehäuseunterteil 2a ausgebildeten zweiten Kanalabschnitt 16 sowie eine dazwischen liegende Durchflußkammer 15, die seitlich durch die Innenwand einer in das Ventilgehäuse 2 eingesetzten Führungsbuchse 26 begrenzt wird. In der Durchflußkammer 15 ist ein Ventilteller 18 aus einem Teflon-Material vorgesehen, der in gleicher Weise wie der Ventilteller der zuvor beschriebenen Ausführungsformen ausgebildet, jedoch in umgekehrter Einbaulage, d.h. mit oben liegender Dichtfläche 19A und unten liegender Führungsfläche 21 in das Ventilgehäuse 2 eingebaut ist. Der Ventilteller 18 ist in vertikaler Richtung zwischen einer unteren Öffnungsstellung und einer oberen Schließstellung, in welcher die Dichtfläche 19A am Ventilteller 18 an einer entsprechenden Dichtfläche 19B eines Ventilsitzes 20, welcher an der Unterseite des ersten Kanalabschnitts 19 ausgebildet ist, dichtend in Anlage kommt, bewegbar. Die Führung dieser Vertikalbewegung erfolgt über die am unteren Randbereich des Ventiltellers 18 ausgebildete Führungsfläche 21, welche an der Innenfläche der Führungsbuchse 26 in Anlage kommt.

Bei dieser Ausführungsform wird der Ventilteller 18 aufgrund der Auftriebskraft des Fluids, welches in dem Durchflußkanal 11 vorgesehen ist, in seine obere Schließstellung gedrückt. Wenn ein Fluid mit einem entsprechenden Druck das Rückschlagventil 1 von oben nach unten durchströmt, wird der Ventilteller 18 in seine untere Schließstellung gedrückt, so daß das durch den ersten Kanalabschnitt 12 einströmende Fluid über die Durchflußkammer 15 und die Durchflußbohrung 22 zum zweiten Kanalabschnitt 16 strömen kann. Je größer der Eingangsdruck wird, desto weiter hebt sich der Ventilteller 18 nach unten hin von dem Ventilsitz 20 ab.

Alternativ kann auch ein Ventilteller aus Edelstahl eingesetzt werden. Da die Dichte des Edelstahlmaterials höher als die des Teflon-Materials ist, und damit ein Edelstahl-Ventilteller nicht durch Auftriebskraft in seine Schließstellung gebracht werden kann, ist es dann erforderlich, den Ventilteller 18 durch eine Feder zu unterstützen, welche den Ventilteller 18 in seine Schließstellung nach oben drückt.

## Patentansprüche

1. Ventilteller (18) für den Einsatz in einem Rückschlagventil, der an einer Stirnseite eine Dichtungsfläche (19A) und am Außenumfang eine Führungsfläche (21) aufweist, wobei radial außerhalb der Dichtungsfläche (19A) axiale Durchflußöffnungen (22) vorgesehen sind, wobei der Ventilteller (18) ausgehend von seiner Führungsfläche (21) unter Bildung einer geneigten Mantelfläche (18A) einen in Richtung der Dichtungsfläche (19A) kleiner werdenden Durchmesser besitzt und daß die Durchflußöffnungen (22) als Bohrungen ausgebildet sind, die von der geneigten Mantelfläche (18A) ausgehend in der von der Dichtungsfläche (19A) weg weisenden Richtung schräg aufeinander zulaufen und gleichmäßig über den Umfang des Ventiltellers (18) verteilt angeordnet sind.

2. Rückschlagventil mit einem Ventilgehäuse (2), in dem ein Durchflußkanal (11) ausgebildet ist, der einen vertikalen Kanalabschnitt (12) mit einer Einlaßöffnung (13) und einer Auslaßöffnung (14) besitzt, und mit einer Sperreinrichtung zum Schließen des Durchflußkanals (11), die einen die Auslaßöffnung (14) des vertikalen Kanalabschnitts (12) umgebenden Ventilsitz (20) und einen Ventilteller (18), der in dem Ventilgehäuse (2) in vertikaler Richtung zwischen einer Öffnungsstellung und einer Schließstellung, in der Dichtungsflächen (19A, 19B) am Ventilteller (18) und Ventilsitz (20) dichtend in Anlage kommen, bewegbar ist, aufweist, wobei der Ventilteller (18) über wenigstens eine an seinem Außenumfang vorgesehene Führungsfläche (21) in dem Ventilgehäuse (2) bewegbar geführt ist und radial außerhalb seiner Dichtungsfläche (19A) Durchflußöffnungen (22) aufweist, **dadurch gekennzeichnet, daß** der Ventilteller (18) nach Anspruch 1 ausgebildet ist.

3. Rückschlagventil nach Anspruch 2, bei welchem der Ventilteller (18) zwischen einer oberen Öffnungsstellung und einer unteren Schließstellung in dem Ventilgehäuse (2) bewegbar ist, **dadurch gekennzeichnet, daß** der Ventilteller (18) allein durch die Schwerkraft in seine Schließstellung beaufschlagt wird.

4. Rückschlagventil nach Anspruch 3, **dadurch gekennzeichnet, daß** das Ventilgehäuse (2) ein Gehäuseunterteil (2a) mit dem vertikalen Kanalabschnitt (12) und dem Ventilsitz (20) und ein Gehäuseoberteil (2b) mit einer zur Unterseite hin offenen Durchflußkammer (15), in welcher der Ventilteller (18) bewegbar geführt ist, aufweist, wobei das Gehäuseunterteil (2a) und das Gehäuseoberteil (2b) miteinander vorzugsweise lösbar verbunden und zu einander zentriert sind.

5. Rückschlagventil nach Anspruch 4, **dadurch gekennzeichnet, daß** sich an die Durchflußkammer (15) nach oben hin ein Kanalabschnitt (16) mit einem geringeren Durchmesser anschließt und dazwischen ein konisch zulaufender Übergangsbereich (17) vorgesehen ist, wobei der Winkel des Übergangsbereichs (17) zur Horizontalen vorzugsweise 30 bis 60° beträgt.

6. Rückschlagventil nach Anspruch 4 oder 5, **dadurch gekennzeichnet, daß** der Boden der Durchflußkammer (15) ausgehend von der Wandung, an welcher der Ventilteller (18) geführt ist, zum Ventilsitz (20) hin mit einem Neigungswinkel von 1,5 bis 4°, insbesondere von 2° abfällt.

7. Rückschlagventil nach einem der Ansprüche 4 bis 6, **dadurch gekennzeichnet, daß** in dem Gehäuseunterteil (2a) ein insbesondere horizontaler Einlaßkanalabschnitt (11a) ausgebildet ist, der mit der Durchflußkammer (15) über den vertikalen Kanalabschnitt (12) verbunden ist.

8. Rückschlagventil nach Anspruch 7, **dadurch gekennzeichnet, daß** in dem Gehäuseunterteil (2a) ein insbesondere horizontaler Auslaßkanalabschnitt (11b) ausgebildet ist, der mit dem Einlaßkanalabschnitt (11a) über die Durchflußkammer (15) verbunden ist.

9. Rückschlagventil nach Anspruch 8, **dadurch gekennzeichnet, daß** der Einlaßkanalabschnitt (11a) und der Auslaßkanalabschnitt (11b) durch eine Gehäusezwischenwand (2a) voneinander getrennt sind, an deren Oberseite zumindest teilweise der Ventilsitz (20) ausgebildet ist.

10. Rückschlagventil nach Anspruch 8 oder 9, **dadurch gekennzeichnet, daß** zwischen dem Gehäuseunterteil (2a) und dem Gehäuseoberteil (2b) ein den Ventilsitz (20) umgebender und zum Auslaßkanalabschnitt (11b) offener Abflußkanal (25) ausgebildet ist.

11. Rückschlagventil nach Anspruch 10, **dadurch gekennzeichnet, daß** der Abflußkanal (25) im Gehäuseunterteil (2a) ausgebildet und an seiner zur Durchflußkammer (15) weisenden Oberseite offen ist.

12. Rückschlagventil nach Anspruch 11, **dadurch gekennzeichnet, daß** der Abflußkanal (25) eine von der Ventileinlaßseite her zum Auslaßkanalabschnitt (11b) zunehmende Tiefe besitzt, so daß Fluid in dem Abflußkanal (25) in den Auslaßkanälabschnitt (11b) automatisch abfließt.

13. Rückschlagventil nach Anspruch 2, bei welchem der Ventilteller zwischen einer unteren Öffnungsstellung und einer oberen Schließstellung vertikal in dem Ventilgehäuse (2) bewegbar ist, **dadurch gekennzeichnet, daß** der Ventilteller (18) an seiner Unterseite durch ein Federelement abgestützt und in seine Schließstellung gedrückt wird.

14. Rückschlagventil nach Anspruch 2, bei welchem der ventilteller zwischen einer unteren Öffnungsstellung und einer oberen Schließstellung vertikal in dem Ventilgehäuse (2) bewegbar ist, **dadurch gekennzeichnet, daß** der Ventilteller aus Teflon besteht und in die obere Schließstellung allein durch Auftriebskraft des Fluids in dem Durchflußkanal gedrückt wird.

15. Rückschlagventil nach einem der Ansprüche 2 bis 14, **dadurch gekennzeichnet, daß** der Ventilteller (18) ausgehend von der Führungsfläche (21) konisch zuläuft, wobei der Winkel der konusförmigen Mantelfläche (18A) zur Horizontalen vorzugsweise etwa 45° beträgt, oder der Ventilteller (18) ausgehend von seiner Führungsfläche (21) unter Bildung einer konvexen Mantelfläche (18A) zuläuft.

16. Rückschlagventil nach einem der Ansprüche 2 bis 15, **dadurch gekennzeichnet, daß** die Durchflußöffnungen (22) unter einem Winkel von 30 bis 60°, insbesondere von 45° zur Achse des Ventiltellers (18) geneigt sind.

17. Rückschlagventil nach einem der Ansprüche 2 bis 16, **dadurch gekennzeichnet, daß** eine der Dichtungsflächen (19A) an einem elastischen Dichtungsring (24) ausgebildet ist.

18. Rückschlagventil nach Anspruch 17, **dadurch gekennzeichnet, daß** der Dichtungsring (24) in eine Ringnut (23) an der Unterseite des Ventiltellers (18) eingesetzt oder an den Ventilteller (18) angespritzt ist.

19. Rückschlagventil nach Anspruch 17 oder 18, **dadurch gekennzeichnet, daß** der Dichtungsring (24) sich zur Dichtfläche (19A) hin verjüngt und insbesondere einen trapezförmigen Querschnitt besitzt, an dessen kurzer Seite die Dichtfläche (19A) ausgebildet ist.

## Claims

1. Valve disc (18) for use in a non-return valve, which comprises a sealing surface (19A) on an end face and a guide surface (21) formed on the outer circumference of the valve disc (18), wherein axial flow apertures (22) are provided radially outside the sealing surface (19A), the valve disc (18) possesses a diameter that, starting from its guide surface (21), becomes smaller towards the sealing surface (19A), forming an inclined external surface (18A), and the flow apertures (22) are formed as bores in the valve disc (18) which start from the inclined external surface (18A) and converge in the direction facing away from the sealing surface (19A) and are disposed in a uniform distribution over the circumference of the valve disc (18).

2. Non-return valve having a valve housing (2), in which is formed a flow channel (11) which possesses a vertical channel section (12), having an inlet aperture (13) and an outlet aperture (14) and having a blocking device for closing the flow channel (11), which blocking device comprises a valve seat (20) surrounding the outlet aperture (14) of the vertical channel section (12) and a valve disc (18), which is movable in the valve housing (2) in the vertical direction between an open position and a closed position in which sealing surfaces (19A, 19B) on the valve disc (18) and valve seat (20) come into sealing contact, wherein the valve disc (18) is movably guided in the valve housing (2) via at least one guide surface (21) provided on its outer circumference and comprises flow apertures (22) radially outside its sealing surface (19A), **characterized in that** the valve disc (18) is formed according to claim 1.

3. Non-return valve according to Claim 2, in which the valve disc (18) is movable in the valve housing (2) between an upper, open position and a lower, closed position, **characterized in that** the valve disc (18) is urged into its closed position by gravity alone.

4. Non-return valve according to Claim3, **characterized in that** the valve housing (2) comprises a lower housing portion (2a) with the vertical channel section (12) and the valve seat (20) and an upper housing portion (2b) with a flow chamber (15) which is open towards the underside and in which the valve disc (18) is movably guided, wherein the lower housing portion (2a) and the upper housing portion (2b) are releasably connected to one another and centred relative to one another.

5. Non-return valve according to Claim 4, **characterized in that** the flow chamber (15) is adjoined at the top by a channel section (16) having a smaller diameter and a conically narrowing transition region (17) is provided therebetween, wherein the angle of the transition region (17) to the horizontal is from 30 to 60°.

6. Non-return valve according to Claim 4 or 5, **characterized in that** the bottom of the flow chamber (15) slopes down towards the valve seat (20) at an angle of inclination of from 1.5 to 4°, especially 2°, starting from the wall on which the valve disc (18) is guided.

7. Non-return valve according to one of Claims 4 to 6, **characterized in that** an inlet channel section (11a), particularly a horizontal inlet channel section (11a), is formed in the lower housing portion (2a) and is connected to the flow chamber (15) via the vertical channel section (12).

8. Non-return valve according to Claim 7, **characterized in that** an outlet channel section (11b), in particular a horizontal outlet channel section (11b), is formed in the lower housing portion (2a) and is connected via the flow chamber (15) to the inlet channel section (11a).

9. Non-return valve according to Claim 8, **characterized in that** the inlet channel section (11a) and the outlet channel section (11b) are separated from one another by a housing partition (2a), on the upper side of which the valve seat (20) is formed, at least in part.

10. Non-return valve according to Claim 8 or 9, **characterized in that** an outflow channel (25) surrounding the valve seat (20) and open towards the outlet channel section (11b) is formed between the lower housing portion (2a) and the upper housing portion (2b).

11. Non-return valve according to Claim 10, **characterized in that** the outflow channel (25) is formed in the lower housing portion (2a) and is open at its upper side facing towards the flow chamber (15).

12. Non-return valve according to Claim 11, **characterized in that** the outflow channel (25) has a depth that increases from the valve inlet side towards the outlet channel section (11b) so that fluid in the outflow channel (25) automatically flows down into the outlet channel section (11b).

13. Non-return valve according to Claim 2, in which the valve disc is vertically movable in the valve housing (2) between a lower, open position and an upper, closed position, **characterized in that** the valve disc (18) is supported at its underside and pressed into its closed position by a spring element.

14. Non-return valve according to Claim 2, in which the valve disc is vertically movable in the valve housing (2) between a lower, open position and an upper, closed position, **characterized in that** the valve disc consists of Teflon and is pressed into the upper, closed position solely by the buoyancy of the fluid in the flow channel.

15. Non-return valve according to any preceding Claim, **characterized in that** the valve disc (18) narrows conically starting from the guide surface (21), wherein the angle of the conical external surface (18A) to the horizontal is approximately 45°, or the valve disc (18) narrows, starting from its guide surface (21), to form a convex external surface (18A).

16. Non-return valve according to one of Claims 2 to 15, **characterized in that** the flow apertures (22) are inclined relative to the axis of the valve disc (18) at an angle of from 30 to 60°, in particular 45°.

17. Non-return valve according to one of the Claims 2 to 14, **characterized in that** one of the sealing surfaces (19A) is formed on an elastic packing ring (24).

18. Non-return valve according to Claim 17, **characterized in that** the packing ring (24) is inserted into an annular groove (23) on the underside of the valve disc (18) or injected onto the valve disc (18).

19. Non-return valve according to one of Claims 17 or 18, **characterized in that** the packing ring (24) tapers towards the sealing surface (19A) and possesses, in particular, a trapezoidal cross section, on the short side of which the sealing surface (19A) is formed.

## Revendications

1. Tête de soupape (18) pour l'utilisation dans une soupape anti-retour qui présente sur un côté frontal, une surface d'étanchéité (19A) et sur 1a circonférence extérieure, une surface de guidage (21) ; des orifices de circulation de flux (22) ax i-aux étant prévus de façon radiallement hors de la surface d'étanchéité (19A); la tête de soupape (18) comportant un diamètre qui se rétrécit en direction de la surface d'étanchéité (19A) en partant de sa surface de guidage (21) et en formant une surface d'enveloppe (18A) inclinée, et les orifices de circulation de flux (22) ayant la forme d'alésages qui partant de la surface d'enveloppe (18A) inclinée se rétrécissent l'un vers l'autre en biais en direction s'éloignant de la surface d'éta n-chéité (19A) et qui sont répartis de façon régulière sur la circonférence de la tête de soupape (18).

2. Soupape anti-retour avec un boîtier de soupape (2) dans lequel est formé un c anal de circulation de flux (11) qui comporte un tronçon de canal (12) vertical avec une ouverture d'entrée (13) et une ouverture de sortie (14) et avec un disp o-sitif de blocage pour fermer le canal de circulation de flux (11), lequel dispositif de blocage comporte un siège de soupape (20) entourant l'ouverture de sortie (14) du tronçon du canal vertical (12) et une tête de soupape (18) qui est susce p-tible d'être déplacée dans le boîtier de soupape (2) en direction verticale entre une position d'ouverture et une position de fermeture, dans laquelle position de fermeture les surfaces d'étanchéité (19A, 19B) sont appliquées de façon étanche sur la tête de soupape (18) et le siège de soupape (20); la tête de soupape (18) étant conduite sur au moins une surface de guidage (21) prévue sur sa circonférence extérieure dans le boîtier de soupape (2), susceptible d'être déplacée et présentant de façon radiallement hors de sa surface d'étanchéité (19A) des or i-fices de circulation de flux (22), **caractérisée en ce que** la tête de soupape est formé selon la revendication 1.

3. Soupape anti-retour selon la revendication 2, dans laquelle la tête de soupape (18) se trouvant entre une position d'ouverture supérieure et une position de fe r-meture inférieure est susceptible de se déplacer dans le boîtier de soupape (2), **caractérisée en ce que** la tête de soupape (18) est appliquée uniquement par la gravité dans sa position de fermeture.

4. Soupape anti-retour selon la revendication 3, **caractérisée en ce que** le boîtier de soupape (2) présente une partie inférieure de boîtier (2a) avec le tronçon de canal (12) vertical et le siège de soupape (20) et une partie supérieure de boîtier (2b) avec une chambre de circulation de flux (15) ouverte vers le côté inférieur, dans laquelle la tête de soupape (18) est susceptible d'être déplacée; la partie inférie ure du boîtier (2a) et la partie supérieure du boîtier (2b) étant reliées ensemble de préférence de façon amovible et centrées l'une par rapport à l'autre.

5. Soupape anti-retour selon la revendication 4, **caractérisée en ce qu'**un tronçon de canal (16) avec un diamètre plus petit est raccordé à la chambre de circulation de flux (15) vers le haut et qu'une zone de transfert (17) se rétrécissant de façon conique est prévue; l'angle de la zone de transfert (17) s'élevant à l'horizontale de préférence de 30° à 60°.

6. Soupape anti-retour selon la revendication 4 ou 5, **caractérisée en ce que** le fond de la chambre de circulation de flux (15) descend avec un angle d'inclinaison de 1,5 à 4°, notamment de 2°, en partant de la paroi sur laquelle la tête de soupape (18) est guidée, vers le siège de soupape (20).

7. Soupape anti-retour selon une des revendications 4 à 5, **caractérisée en ce que** dans la partie inférieure du boîtier (2a), est formé un tronçon de canal d'entrée (11a), de préférence horizontal, qui est relié avec la chambre de circulation de flux (15) par le tronçon de canal (12) vertical.

8. Soupape anti-retour selon la revendication 7, **caractérisée en ce que** dans la partie inférieure du boîtier (2a) est formé un tronçon de canal de sortie (11b) de préférence horizontal, qui est relié avec le tronçon de canal d'entrée (11a) par la chambre de circulation de flux (15).

9. Soupape anti-retour selon la revendication 8, **caractérisée en ce que** le tronçon de canal d'entrée (11a) et le tronçon de canal de sortie (11b) sont séparés l'un de l'autre par une paroi intermédiaire de boîtier (2a) sur les côtés supérieurs de s-quels est formé au moins partiellement, le siège de soupape (20).

10. Soupape anti-retour selon la revendication 8 ou 9, **caractérisée en ce qu'**un canal d'écoulement (25) entourant le siège de soupape (20) et ouvert vers le tronçon du canal de sortie (11b), est formé entre la partie inférieure du boîtier (2a) et la pa r-tie supérieure du boîtier (2b).

11. Soupape anti-retour selon la revendication 10, **caractérisée en ce que** le canal d'écoulement (25) est formé dans la partie inférieure du boîtier (2a) et est ouvert sur son côté supérieur orienté vers la chambre de circulation de flux (15).

12. Soupape anti-retour selon la revendication 11, **caractérisée en ce que** le canal d'écoulement (25) comporte une profondeur augmentant du côté de l'entrée de la soupape vers le tronçon du canal de sortie (11b) de manière à ce que le fluide présent dans le canal d'écoulement (25) s'écoule automatiquement dans le tronçon du canal de sortie (11b).

13. Soupape selon la revendication 2, dans lequel la tête de soupape est susceptible d'être déplacée de façon verticale dans le boîtier de soupape (2) entre une posit ion d'ouverture inférieure et une position de fermeture supérieure, **caractérisée en ce que** la tête de soupape (18) est supportée sur son côté inférieur et pressée dans sa position de fermeture par un élément de ressort.

14. Soupape anti-retour selon la revendication 2, dans laquelle la tête de soupape est susceptible d'être déplacée de façon verticale entre une position d'ouverture inférieure et une position de fermeture supérieure dans le boîtier de soupape (2), c a-ractérisée en ce que la tête de soupape est composée de Téflon et se trouve pressée dans la position de fermeture supérieure uniquement par la poussée d'Archimède du fluide dans le canal de circulation de fluide.

15. Soupape anti-retour selon une des revendications 2 à 14, **caractérisée en ce que** la tête de soupape (18) se rétrécit de façon conique en partant de la surface de guidage (21); l'angle de la surface d'enveloppe (18A) en forme de cône s'élevant de préférence à environ 45° vers l'horizontale, ou la tête de soupape (18) se rétrécit en formant une surface d'enveloppe (18A) convexe en partant de sa su r-face de guidage (21).

16. Soupape anti-retour selon une des revendications 2 à 15, **caractérisée en ce que** l'ouverture de circulation de flux (22) est inclinée sous un angle de 30° à 60°, notamment de 45° par rapport à l'axe de la tête de soupape (18).

17. Soupape anti-retour selon une des revendications 2 à 16, **caractérisée en ce qu'** une des surfaces d'étanchéité (19A) est formée sur un anneau d'étanchéité (24) élastique.

18. Soupape anti-retour selon la revendication 17, **caractérisée en ce que** l'anneau d'étanchéité (24) est introduit dans une rainure annulaire sur le côté inférieur de la tête de soupape (18) ou est coulé sur la tête de soupape (18).

19. Soupape anti-retour selon la revendication 17 ou 18, **caractérisée en ce que** l'a n-neau d'étanchéité (24) se rétrécit en direction de la surface d'étanchéité (19A) et comporte notamment, une coupe transversale trapézoïdale sur le côté court de laquelle se trouve formée la surface d'étanchéité (19A).
